Europäisches Patentamt

European Patent Office

Office européen des brevets

(11) Veröffentlichungsnummer: **0 066 788**
**B1**

# (12) EUROPÄISCHE PATENTSCHRIFT

(45) Veröffentlichungstag der Patentschrift:
26.02.86

(21) Anmeldenummer: 82104616.6

(22) Anmeldetag: 27.05.82

(51) Int. Cl.⁴: **B 22 C 1/00,** B 22 C 1/16, B 22 C 1/18

(54) Verfahren zur Herstellung von Formkörpern unter Verwendung von Bindemitteln auf Basis von Alkalimetallsilikatlösungen.

(30) Priorität: 04.06.81 DE 3122244

(43) Veröffentlichungstag der Anmeldung:
15.12.82 Patentblatt 82/50

(45) Bekanntmachung des Hinweises auf die Patenterteilung:
26.02.86 Patentblatt 86/9

(84) Benannte Vertragsstaaten:
AT BE CH DE FR LI NL SE

(56) Entgegenhaltungen:
DE - A - 2 750 294
DE - A - 2 856 267
DE - A - 2 909 107
DE - B - 2 110 059

Chemical Abstracts, Band 76, Nr. 16, 17. April 1972,
Columbus, Ohio, USA, F.M. BEREZOVSKII et al. "Use of
sodium silicate in the investment casting process",
Seite 223, abstract no. 89007x
Chemical Abstracts, Band 79, 22. Oktober - 5. November
1973, Columbus, Ohio, USA, V.N. MIKHAILOV
"Manufacture of ceramic molds for precision casting",
Seite 261, abstract no. 96081g
Chemical Abstracts, Band 84, 24. Mai - 7. Juni 1976,
Columbus, Ohio, USA, Y. SHIMADA et al.
"Precision-casting molds", Seite 231, abstract no.
153997q

(73) Patentinhaber: Henkel Kommanditgesellschaft auf
Aktien, Postfach 1100 Henkelstrasse 67,
D-4000 Düsseldorf-Holthausen (DE)

(72) Erfinder: Maak, Norbert, Dr., Liebigstrasse 81,
D-4040 Neuss (DE)
Erfinder: Friedemann, Wolfgang, Dr.,
Stephanusstrasse 14, D-4040 Neuss (DE)
Erfinder: Fehr, Hans, Burscheiderstrasse 45,
D-4000 Düsseldorf 13 (DE)
Erfinder: Feulner, Kurt, Nienhuser Busch 42,
D-4300 Essen 12 (DE)

## Beschreibung

Gegenstand der Erfindung ist ein Verfahren zur Herstellung von Formkörpern, insbesondere von Formen und/oder Kernen für den Metallguß, unter Verwendung von Bindemittelzusammensetzungen auf der Basis wäßriger Alkalimetallsilikatlösungen, die—aufgrund eines Gehaltes an organischen Zusatzstoffen—verbesserte anwendungstechnische Eigenschaften der Formkörper bedingen.

Bindemittelzusammensetzungen auf Basis wäßriger Alkalimetallsilikatlösungen sind seit langem bekannt und werden in großem·Umfang in der Praxis eingesetzt. Solche Bindemittelzusammensetzungen dienen beispielsweise zur Herstellung von mineralischen Isolierstoffen, Imprägniermitteln, Überzugsmassen, Anstrichmitteln und Kitten sowie zum Verkleben von Holz, Papier, Keramik und mineralischem Material. Die hierzu verwendeten Alkalimetallsilikatlösungen—insbesondere Natriumsilikatlösungenweisen in der Regel ein Molverhältnis $SiO_2 : Me_2O$ (Me = Natrium und/oder Kalium) im Bereich von 2,0:1 bis 3,4:1 sowie einen Feststoffgehalt von 35 bis 50 Gewichtsprozent auf.

Derartige Bindemittel lassen sich gleichfalls zur Herstellung von Formkörpern für den Metallguß verwenden. Üblicherweise werden hierbei die wäßrigen Alkalimetallsilikatlösungen, die vorzugsweise ein Molverhältnis $SiO_2 : Me_2O$ im Bereich von 2,0:1 bis 2,9:1 aufweisen, mit einem feinteiligen Füllstoff—beispielsweise Sand—vermischt, die resultierende Mischung in die gewünschte Form gebracht und mit Hilfe eines geeigneten Härters verfestigt. Ein geeigneter Härter für diesen Zweck ist zum Beispiel Kohlendioxidgas.

Wesentliche Nachteile einer solchen Bindemittelzusammensetzung beziehungsweise eines derartigen Verfahrens sind darin zu sehen, daß die Fließfähigkeit der angesetzten Mischungen nicht ausreicht, um ein lückenloses Füllen komplizierter Hohlformen mit dem Gemisch zu gestatten, daß die Frühfestigkeit der begasten Kerne innerhalb der ersten Stunde zu gering ist, um sie zu transportieren, sowie daß sich die fertigen Formen und Kerne nach dem Metallguß nur äußerst schwer zerbrechen lassen. Um den Zerfall der Formkörper nach erfolgtem Guß zu fördern, werden derartigen Bindemitteln beispielsweise verschiedene Kohlenhydrate, wie Zucker, Melasse, Stärke oder Stärke- beziehungsweise Cellulose- derivate zugefügt. Keiner dieser Zusätze übt jedoch einen positiven Einfluß auf die Frühfestigkeit der begasten Formkörper aus.

So sind zum Beispiel aus der DE—OS 27 50 294 Bindemittel in Form einer wäßrigen Lösung mit einem Gehalt an einem Alkalisilikat und einem Kohlenhydrat bekannt, die ein im wesentlichen wasserlösliches Kohlenhydrat aus der Gruppe der Glykane, der Glykanoligosaccharide, der Glykanitole, der Glykantolderivate der Oligosaccharide, der Monosaccharide und der Disaccharide und deren Derivaten sowie ein Oxyanion des Bors, Zinns, Germaniums, Tellurs oder Arsens, welches mit dem Kohlenhydrat eine wasserlösliche Komplexverbindung zu bilden vermag, enthalten.

In den PCT-Patentanmeldungen (International Publication) WO 80/01 767 und WO 80/01 768 werden Bindemittelzusammensetzungen auf Basis einer wäßrigen Alkalimetallsilikatlösung beschrieben, die wasserlösliche Kohlenhydrate aus der Gruppe der Mono-, Di- und Polysaccharide oder deren Derivaten sowie Harnstoff (WO 80/01 767) beziehungsweise eine phenolische Verbindung, ausgewählt aus der Gruppe von Verbindungen mit einer, zwei oder drei Phenolresten, mehrkernigen Kohlenwasserstoffen mit Phenolresten und Phenolsäuren (WO 80/01 768) enthalten.

Gegenstand der DE—OS 28 56 267 sind nicht selbsthärtende Bindemittel für Formstoffe zur Herstellung von Gießereiformen und -kernen in Form wäßriger Lösungen von Alkalisilikaten mit einem Zusatz von einem oder mehreren anionaktiven und/oder nichtionogenen Tensiden. Derartige Zusätze sollen die Fließfähigkeit der Bindemittel verbessern.

In "Russian Castings Production" (1971), Seiten 530 und 531—entsprechend "Chemical Abstracts", Band 76 (1972), Seite 223, Abstract Nr. 89007x—wird ein Verfahren zum schichtweisen Aufbau einer Negativform aus silikatischen Grundstoffen um ein Wachsmodell beschrieben. Hierbei werden die einzelnen Schichten der Form durch Aufbringen eines Slurrys aus Natriumsilikat - Lösung und Sand (Verhältnis 1:1) auf das' Modell und anschließendes Aushärten der jeweiligen Schicht durch Eintauchen in eine Aluminium-chlorid-Lösung erhalten. Nach Fertigstellung der Form wird das Wachs ausgeschmolzen. Die bei diesem Verfahren erzielten Verbesserungen—hinsichtlich Dimensionstreue, Härte und Rißstabilität der Form—resultieren aus der Verwendung von Natriumsilikat mit einem Triethanolamin - Zusatz in Verbindung mit der Aluminiumchlorid - Härtung.

Demgegenüber ist es die Aufgabe der vorliegenden Erfindung, ein Verfahren zur Herstellung von Formkörpern, insbesondere für den Metallguß, unter Verwendung eines Bindemittels auf Basis wäßriger Alkalimetallsilikatlösungen sowie von Kohlendioxid als Härter zu entwickeln, das geeignet ist, bei guter Fließfähigkeit der frisch angesetzten Sandmischung den gehärteten und ausgeschalten Formkörpern eine verbesserte Frühfestigkeit, eine gute Endfestigkeit sowie ein hinreichend gutes Zerfallsverhalten nach erfolgtem Guß zu verleihen.

Gegenstand der Erfindung ist somit ein Verfahren zur Herstellung von Formkörpern, insbesondere von Formen und/oder Kernen für den Metallguß,

a) aus feinteiligen Füllstoffen, vorzugsweise Quarzsand, und

b) einem Bindemittel auf Basis wäßriger Alkalimetallsilikatlösungen, die ein Molverhältnis $SiO_2 : Me_2O$ von 2,4:1 bis 3,4:1, wobei Me Natrium und/oder Kalium bedeutet, und einen Feststoffgehalt von 35 bis 50 Gew.-% aufweisen, sowie einen Gehalt an organischen Zusatzstoffen, wobei man

c) den Füllstoff mit 3 bis 6 Gew.-% des Bindemittels intensiv vermischt,

d) die resultierende Mischung in die gewünschte Form bringt und verdichtet,

e) und anschließend durch Begasen mit Kohlendioxid aushärtet, welches dadurch gekennzeichnet ist, daß man

f) dem Bindemittel 0,1 bis 2 Gew.-%, bezogen auf die Bindemittelzusammensetzung, Triethanolamin zusetzt.

Überraschenderweise wurde nämliche gefungen, daß ein solcher Zusatz von Triethanolamin zum Bindemittel nicht nur der Sandmischung vor dem Härten eine gute Fließfähigkeit verleiht und zu guten Zerfallswerten der Formkörper nach erfolgtem guß führt, sondern insbesondere die Frühfestigkeit der gehärteten Formkörper erheblich verbessert. Unter Frühfestigkeit wird hierbei die Druckfestigkeit der begasten Formkörper nach der ersten Stunde nach erfolgter Härtung verstanden. Selbst nach relativ kurzen Härtungszeiten der Formkörper durch begasen mit Kohlendioxid resultieren so bereits ausgezeichnete Anfangsdruckfestigkeiten, die die Handhabung und den Transport der gehärteten Formkörper wesentlich erleichtern. Die hervorragende Fließfähigkeit der nach dem erfindungsgemäßen Verfahren angesetzten Sandmischungen bedingt ein voll-ständiges Füllen auch komplizierter Hohlformen, ohne weiteren technischen Aufwand. Darüber hinaus zeigen die nach dem erfindungsgemäßen Verfahren erstellten Formkörper ein sehr gutes Zerfallsverhalten nach dem Guß.

Die Wirkung des erfindungsgemäßen Zusatzes an Triethanolamin zu derartigen Bindemitteln ist um so überraschender, als mit Zusätzen von Monoethanolamin oder Diethanolamin die erwünschten Effekte nur in ungenügendem Maße resultieren.

Demgegenüber erweist sich ein Zusatz von Triethanolamin bereits in einer Menge von 0,1 Gewichtsprozent, bezogen auf die gesamte Bindemittelungszusammensetzung, als wirksam. Die erfindungsgemäße obere Grenze des Triethanolamin - Zusatzes von 2 Gewichtsprozent ist bedingt durch die maximale Löslichkeit von Triethanolamin in Alkalimetallsilikatlösungen mit einem Molverhältnis $SiO_2:Me_2O$ von 2,4:1 und handelsüblichen Konzentrationen.

Darüber hinaus können erfindungsgemäß in Alkalimetallsilikatlösungen mit einem Molverhältnis $SiO_2:Me_2O$ größer als 2,4:1, z.B. von 3,4:1, auch größere Mengen an Triethanolamin mit Vorteil Verwendung finden. In mit Wasser stärker verdünnteren Alkalimetallsilikatlösungen sind auch bei solchen mit einem $SiO_2/Me_2O$ - Molverhältnis von 2,4:1 größere Zusatzmengen an Triethanolamin möglich und vorteilhaft.

Dies gilt um so mehr, wenn der Bindemittelzusammensetzung zusätzlich ein oder mehrere gebräuchliche Lösungsvermittler—beispielsweise, Natrium - Cumolsulfonat, Sorbit oder Glykolzugefügt werden.

Die nach dem erfindungsgemäßen Verfahren hergestellten Formkörper zeichnen sich ferner durch eine verminderte Hygroskopizität sowie eine gute Kantenfestigkeit aus.

Gewünschtenfalls können den Bindemitteln im Hinblick auf eine weitere Steigerung der Fließfähigkeit der angesetzten Sandmischungen anionaktive und/oder nichtionogene Tenside in bekannter Weise zugefügt werden. Ferner können die Mittel gegebenenfalls noch gebräuchliche Zerfallsförderer, beispielsweise Kohlenhydrate, wie Zucker, Melasse, Stärke oder Stärke- beziehungsweise Cellulose- derivate enthalten.

Die Wasserfestigkeit der gebundenen Formkörper läßt sich bereits durch geringe Zusatzmengen von Lithiumsilikaten steigern.

Grundlage für die bei dem erfindungsgemäßen Verfahren zu verwendenden Alkalimetallsilikatlösungen sind in der Regel übliche Wasserglaslösungen, beispielsweise Natriumsilikatlösungen und/oder Kaliumsilikatlösungen, deren Molverhältnisse und Feststoffgehalte im Rahmen der vorstehend angegebenen Werte liegen. Entsprechende wäßrige Alkalimetallsilikatlösungen können jedoch auch durch Auflösen pulverförmiger wasserlöslicher Alkalimetallsilikate erhalten werden. Im Interesse eines guten Bindevermögens verwendet man bevorzugt ein Alkalimetallsilikat mit einem Molverhältnis $SiO_2:Me_2O$ im Bereich von 2,4:1 bis 2,9:1, wobei Me Natrium und/oder Kalium bedeutet. Insbesondere erweist sich die Verwendung von Natrium/Kalium - Mischgläsern—das heißt Natriumsilikat/Kaliumsilikat - Lösungen—als besonders vorteilhaft im Hinblick auf sehr gute Frühfestigkeits - Werte der gehärteten Formkörper.

Die Herstellung der erfindungsgemäßen Formkörper erfolgt in an sich bekannter Weise: Es werden drei bis sechs Gewichtsprozent des Bindemittels mit einem feinteiligen Füllstoff—üblicherweise Quarzsand—intensiv vermischt und unter Verwendung von Kohlendioxid ausgehärtet.

In den nachfolgenden Beispielen werden Verfahren zur Herstellung von Formkörpern unter verwendung von Bindemitteln auf Basis von Alkalimetallsilikatlösungen im Sinne der Erfindung näher erläutert.

Beispiel 1

Das verwendete Bindemittel weist die folgende Zusammensetzung auf:

90 Gewichtsprozent einer Natriumsilikatlösung mit einem Molverhältnis $SiO_2:Na_2O$ von 2,57:1 und einem Feststoffgehalt von 41,65 Gewichtsprozent,

5 Gewichtsprozent einer 20 gewichtsprozentigen, wäßrigen Triethanolaminlösung,

5 Gewichtsprozent entionisiertes Wasser.

Das Bindemittel wird erhalten durch Vermischen der wäßrigen Lösungen.

Die Verwendung des Bindemittels zur Herstellung von Formkörpern wird in der nachstehend beschriebenen Weise durchgeführt:

1 000 Gewichtsteile Quarzsand (Körnung F 32) werden mit 40 Gewichtsteilen des vorstehend beschriebenen Bindemittels zwei Minuten lang intensiv gemischt. Anschließend werden 170 Gramm des erhaltenen Gemisches in einem Rammapparat nach Georg Fischer (hergestellt durch die Georg Fischer Aktiengesellschaft, Schaffhausen, Schweiz) zu zylindrischen Kernen mit einer Höhe von 60 mm und einem Durchmesser von 50 mm durch drei Rammschläge geformt und verdichtet. Die erhaltenen Kerne werden so dann durch Begasen mit Kohlendioxid (28 Liter pro Minute, 5 Sekunden lang bei 25°C. 1,5 bar Leitungsdruck) gehärtet.

Die Druckfestigkeiten der Formkörper nach einer Stunde Lagerung bei Raumtemperatur (Frühfestigkeiten) werden mit Hilfe eines Druckfestigkeitsprüfgerätes nach Georg Fischer (hergestellt durch die Georg Fischer Aktiengesellschaft, Schaffhausen, Schweiz) ermittelt. Die Ergebnisse sind in der nachfolgenden Tabelle wiedergegeben.

Zur Bestimmung der Fließfähigkeit werden 170 Gramm des frisch angesetzten Sand-/Bindemittelgemisches in ein Fließfähigkeitsprüfgerät Typ PFB (hergestellt durch die Georg Fischer Aktiengesellschaft, Schaffhausen, Schweiz) eingewogen, anschließend in den Rammapparat eingeführt und mit drei Rammsschlägen verdichtet. Der Anzeigewert an der Rammstange wird angelesen und die Fließfähigkeit F nach der Formel $F\% = 6,66 \cdot (60 \text{ minus abgelesenem Anzeigewert})$ errechnet.

Die Bestimmung der Zerfallseigenschaften der Formkörper kann in den meisten Fällen unter Laborbedingungen nicht quantitativ erfolgen, da die getemperten Kerne meist bereits bei Berührung oder bei dem Versuch, sie zum Druckprüfgerät zu transportieren, zerfallen. Aus diesem Grunde wurde nach dem nachfolgend beschriebenen Prüfverfahren getestet: Die unter den vorstehend angeführten Bedingungen hergestellten Formkörper wurden 72 Stunden lang bei Raumtemperatur und 50 Prozent relativer Luftfeuchtigkeit gelagert, danach bei 720 Grad Celsius beziehungsweise 900 Grad Celsius jeweils 2 Minuten lang getempert und anschließend im Druckfestigkeitsprüfgerät nach Georg Fischer untersucht. Die hierbei ermittelten Ergebnisse finden sich gleichfalls in der nachfolgenden Tabelle.

Die Ergebnisse der nachstehenden Beispiele wurden, soweit nicht gesondert vermerkt, unter den gleichen Arbeits- und Prüfbedingungen erhalten. Die ermittelten Resultate sind gleichfalls in der nachstehenden Tabelle aufgeführt.

Beispiel 2

90 Gewichtsprozent einer Natriumsilikatlösung gemäß Beispiel 1 werden mit

0,5 Gewichtsprozent einer 20 gewichtsprozentigen wäßrigen Lösung von Triethanolamin und

9,5 Gewichtsprozent entionisiertem Wasser versetzt.

Beispiel 3

90 Gewichtsprozent einer Natriumsilikatlösung mit einem Molverhältnis $SiO_2:Na_2O$ von 2,47:1 und einem Feststoffgehalt von 47,3 Gewichtsprozent werden mit

10 Gewichtsprozent einer 20 gewichsprozentigen wäßrigen Triethanolaminlösung versetzt.

Beispiel 4

90 Gewichtsprozent einer Alkalimetallsilikatlösung, bestehend aus

80 Gewichtsprozent einer Natriumsilikatlösung mit einem Molverhältnis $SiO_2:Na_2O$ von 2,47:1 und einem Feststoffgehalt von 47,3 Gewichtsprozent sowie

20 Gewichtsprozent einer Kaliumsilikatlösung mit einem Molverhältnis $SiO_2:K_2O$ 2,88:1 und einem Feststoffgehalt von 41,1 Gewichtsprozent, werden mit

10 Gewichtsprozent einer 20 gewichtsprozentigen wäßrigen Triethanolaminlösung versetzt.

Vergleichbeispiel 1

Im Gegensatz zu den vorstehenden erfindungsgemäßen Beispielen enthält diese Vergleichsbeispiel Diethanolamin.

90 Gewichtsprozent einer Natriumsilikatlösung mit einem Molverhältnis $SiO_2:Na_2O$ von 2,47:1 und einem Feststoffgehalt von 47,2 Gewichtsprozent werden mit

10 Gewichtsprozent einer 30 gewichtsprozentigen wäßrigen Diethanolaminlösung versetzt.

Vergleichbeispiel 2

Das Bindemittel dieses Beispiels ist triethanolaminfrei. Es werden 90 Gewichtsprozent einer Natriumsilikatlösung mit einem Molverhältnis $SiO_2:Na_2O$ von 2,47:1 und einem Feststoffgehalt von 47,3 Gewichtsprozent mit

10 Gewichtsprozent entionisiertem Wasser versetzt.

Die Ergebnisse der vorstehenden Beispiele bezüglich Fließfähigkeit, Frühfestigkeit und Zerfallsverhalten der Formteile nach dem Guß sicf in der nachstehenden Tabelle zusammengestellt.

TABELLE

| Beispiel | Fließfähigkeit (%) | Druckfestigkeit nach einer Stunde (bar) | Zerfallsverhalten nach 72 Stunden | |
|---|---|---|---|---|
| | | | bei 720°C | bei 900°C |
| 1 | 31,3 | 11,08 | gut | gut |
| 2 | 33,74 | 8,33 | befriedigend | befriedigend |
| 3 | 32,41 | 10,53 | sehr gut | sehr gut |
| 4 | 41,63 | 14,5 | gut | gut |
| Vergleich 1 | 24,98 | 7,0 | ungenügend | ungenügend |
| Vergleich 2 | 27,53 | 6,03 | ungenügend | ungenügend |

Bewertung des Zerfallsverhaltens:
"sehr gut": Die Formkörper zerfallen bei Berührung.
"gut": Die Formkörper lassen sich mit der Hand leicht zerdrücken.
"befriedigend": Die Formkörper zerfallen bereits bei geringem Preßdruck.
"ungenügend": Die Formkörper zerfallen erst bei erhöhtem Preßdruck.

## Patentansprüche

1. Verfahren zur Herstellung von Formkörpern, insbesondere von Formen und/oder Kernen für den Metallguß,
a) aus feinteiligen Füllstoffen, vorzugsweise Quarzsand, und
b) einem Bindemittel auf Basis wäßriger Alkalimetallsilikatlösungen, die ein Molverhältnis $SiO_2:Me_2O$ von 2,4:1 bis 3,4:1, wobei Me Natrium und/oder Kalium bedeutet, und einen Feststoffgehalt von 35 bis 50 Gew.-% aufweisen,
sowie einen Gehalt an organischen Zusatzstoffen, wobei man
c) den Füllstoff mit 3 bis 6 Gew.-% des Bindemittels intensiv vermischt,
d) die resultierende Mischung in die gewünschte Form bringt und verdichtet,
e) und anschließend durch Begasen mit Kohlendioxid aushärtet,
dadurch gekennzeichnet, daß man
f) dem Bindemittel 0,1 bis 2 Gew.-% bezogen auf die Bindemittelzusammensetzung, Triethanolamin zusetzt.

2. Verfahren nach Anspruch 1, dadurch gekennzeichnet, daß man ein Alkalimetallsilikat mit einem Molverhältnis $SiO_2:Me_2O$ im Bereich von 2,4:1 bis 2,9:1 verwendet.

## Revendications

1. Procédé pour la fabrication de corps moulés, en particulier de moules et/ou de noyaux pour la coulée des métaux,
a) à partir de matières de remplissage finement divisées, de préférence de sable de quartz, et
b) d'un liant à base de solutions aqueuses de silicates de métaux alcalins qui présentent un rapport molaire $SiO_2:Me_2O$ DE 2,4:1 à 3,4:1, Me représentant le sodium et/ou le potassium, avec une teneur en matières solides de 35 à 50% en poids,
c) ainsi qu'une teneur en additifs organiques, où la matière de remplissage est mélangée énergiquement avec 3 à 6% en poids du liant,
d) ou le mélange obtenu a la forme voulue et est compacté,
e) ou immédiatement après, les pièces moulées sont durcies en les traitant avec du dioxyde de carbone,
procédé caractérisé en ce que l'on ajoute au liant 0,1 à 2% en poids calculé sur la composition liante, de triéthanolamine.

2. Procédé suivant la revendication 1, caractérisé en ce que l'on utilise un silicate de métal alcalin dont le rapport molaire $SiO_2:Me_2O$ est de l'ordre de 2,4: à 2,9:1.

## Claims

1. A method of making shaped bodies, particularly moulds and/or cores for casting metals,
a) of finely divided fillers, preferably quartz sand, and
b) a binder based on aqueous alkali metal silicate solutions which have a molar ratio of $SiO_2$ to $Me_2O$ of from 2.4:1 to 3.4:1 (Me=sodium and/or potassium) and a solids content of from 35 to 50% by weight and a content of organic additives,
c) the filler being intensively mixed with from 3 to 6% by weight of the binder,
d) the resulting mixture being brought into the required shape and compressed,
e) and then hardened by gassing with carbon dioxide, characterized in that
f) from 0.1 to 2% by weight of triethanolamine, based on composition of the binder, is added to the binder.

2. A process as claimed in Claim 1, characterized in that an alkali metal silicate having a molar ratio of $SiO_2$ to $Me_2O$ of from 2.4:1 to 2.9:1 is used.

6